Europäisches Patentamt

European Patent Office

Office européen des brevets

(19)

(11) Publication number: **0 139 789**
**B1**

(12) **EUROPEAN PATENT SPECIFICATION**

(45) Date of publication of patent specification: **16.03.88**

(51) Int. Cl.⁴: **B 60 F 3/00**

(21) Application number: **83201552.3**

(22) Date of filing: **30.10.83**

(54) Amphibian vehicle for shallow water.

(43) Date of publication of application:
**08.05.85 Bulletin 85/19**

(45) Publication of the grant of the patent:
**16.03.88 Bulletin 88/11**

(84) Designated Contracting States:
**BE DE FR GB LU NL**

(56) References cited:
**FR-A-2 181 604**
**FR-A-2 395 160**
**FR-A-2 430 326**
**NL-A-8 202 107**
**NL-A-8 202 805**
**US-A-3 740 075**

(73) Proprietor: **Hydrowega Holland BV**
**Nijverheidsweg 5**
**NL-4906 CM Oosterhout (NL)**

(72) Inventor: **Koot, Bastiaan Cornelis Maria**
**Kuipersveer 15c**
**NL-2297 ZG Puttershoek (NL)**

(74) Representative: **Van Assen, Jan Willem**
**Bernhard**
**Octrooibureau van Assen Assenpatent B.V.**
**Konijnenlaan 22**
**NL-2243 ER Wassenaar (NL)**

EP 0 139 789 B1

Courier Press, Leamington Spa, England.

## Description

The invention relates to an amphibian vehicle for shallow water, such as described in the preamble of claim 1.

From the document FR—A—2.181.604 an amphibian vehicle is known which can ride on wheels over the bottom, which wheels can be retracted in wheel casings during the sailing. These wheel casings cause a substantial reduction of the strength of the hull and also occupy an important part of the useful cargo space. Furthermore, the wheels always stand close together, because of which both the transverse and the longitudinal stability against tilting moments is small, when the vehicle stands on its wheels in the water. For this reason this vehicle is less suitable for executing ground operations, such as dredging, in which the ladder exercises tilting moments on the vehicle.

The object of the invention is the removal of this objection, which is reached by the characterizing part of claim 1.

Through these measures is reached, that on the one hand the strength of the hull is substantially increased, whereas on the other hand also the stability, primarily when resting on the bottom, but also when floating in the water, is essentially increased, for which reason the vehicle is exceptionally suitable for executing ground operations, such as dredging.

The document US—A—3.740.075 shows a dredging pontoon which is displacable over the road, which pontoon can be suspended on the one end on a tractor and has a bogie at the other end. This vehicle is not self propelled and derives its stability during dredging from the usual anchor poles or spuds which are driven in the ground and when changing the location have to be drawn and be driven in.

The invention will now further be elucidated referring to the accompanying drawing of some embodiments.

Fig. 1 is a side view of an amphibian vehicle according to a first embodiment, which is equipped for dredging work.

Fig. 2 is a view from behind of the vehicle according to fig. 1.

Fig. 3 is a plan view of the vehicle according to fig. 1 and fig. 2.

Fig. 4 is a side view on a smaller scale than fig. 1—3 of a second embodiment of an amphibian vehicle.

Fig. 5 is a side view on the same scale as fig. 4 of a third embodiment of an amphibian vehicle.

Fig. 6 shows a side view on another scale of a fourth embodiment of the invention with supporting posts.

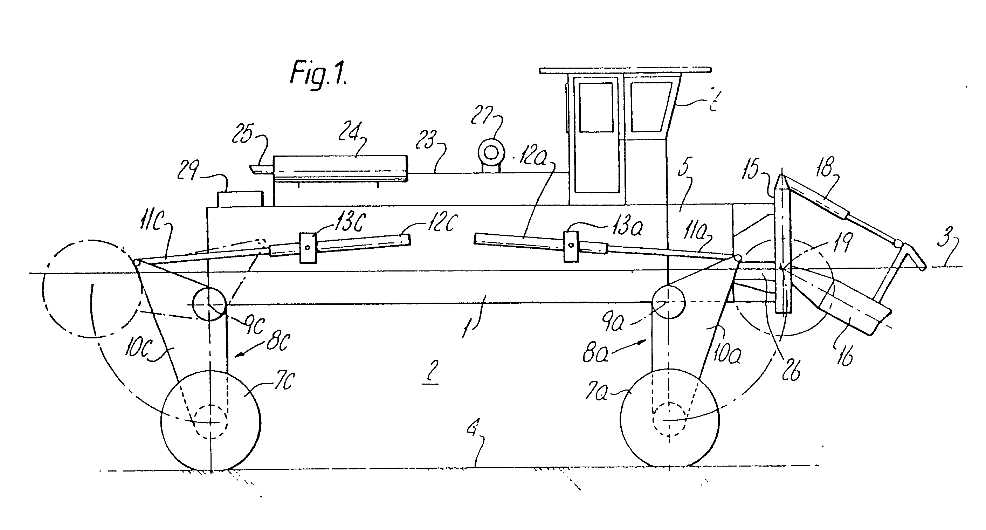

The first embodiment of an amphibian vehicle according to the invention shown in figs 1—3 comprises a water tight hull 1 floating in the water 2 having a level 3 and a bottom 4. The hull 1 has been provided with tapering bows 5. Furthermore the hull is provided with an operating house 6 for the operators of the amphibian vehicle. The hull is preferably a pontoon.

The amphibian vehicle has been provided with a ground transport mechanism which comprises in this first embodiment the four drum shaped wheels 7a, 7b, 7c, 7d, which can each be displaced by means of a separate height adjusting mechanism, generally indicated by 8a, 8b, 8c and 8d, between a low and a high end position.

Each height adjusting mechanism 8a through 8d has a pivot shaft 9a through 9d which is fastened to the hull 1. The pivot shafts 9a and 9b near the front side of the hull 1 are coaxial, which is also valid for the pivot shafts 9c and 9d near the back side of the hull 1. Around these pivot shafts 9a through 9d the two armed levers 10a through 10d are pivotable, which levers each have the form of an obtuse triangle in which the pivot shaft is mounted near the obtuse angle. On the bottom side of the long arm of the levers 10a through 10d a wheel 7a through 7d is arranged. The front wheels 7a, 7b are driven by a (non shown) hydraulic motor, whereas the back wheels 7c, 7d are each equipped with a (non shown) brake. At the end of the other arm of the levers 10a through 10d the outer end of the piston rod 11a through 11d is respectively pivotally fastened, which piston rods are each displacable in a hydraulic cylinder 12a through 12d which in their turn are each pivotally mounted around a pivot shaft 13a through 13d on the side walls of the hull 1.

With this structure of the ground transport mechanism 7 and the height adjusting mechanism 8 the amphibian vehicle can displace itself through the water within the limits of the high and the low end position, which have been indicated by means of the dash-dot and solid lines respectively in fig. 1. In the low end position the amphibian vehicle rests on the bottom 4 and in the high end position its freely floating. The displacement in the direction of movement is therein possible by means of the driven wheels 7.

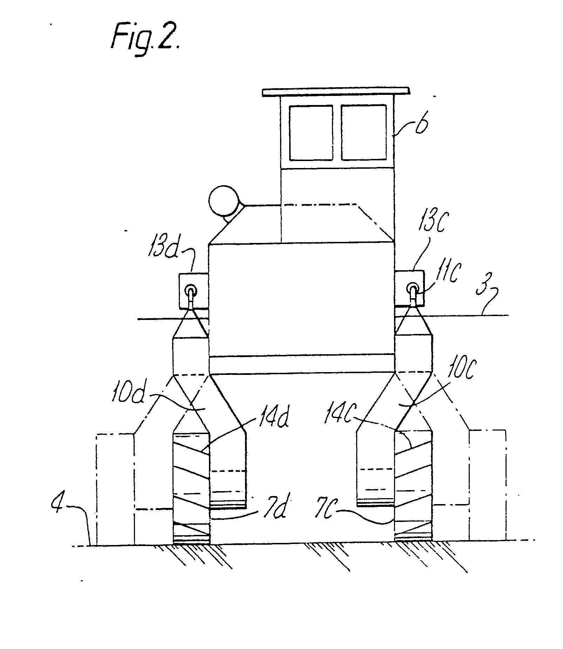

Such as is shown with dash-dot lines in fig. 2 the two armed levers 10 can also be outwardly bent, by means of which the gauge of the amphibian vehicle is increased, which again results in an increased transverse stability.

The drum shaped wheels 7a through 7d can be provided with means 14a through 14d which increase the grip on the bottom 4, which means can for example comprise ridges, pins and such.

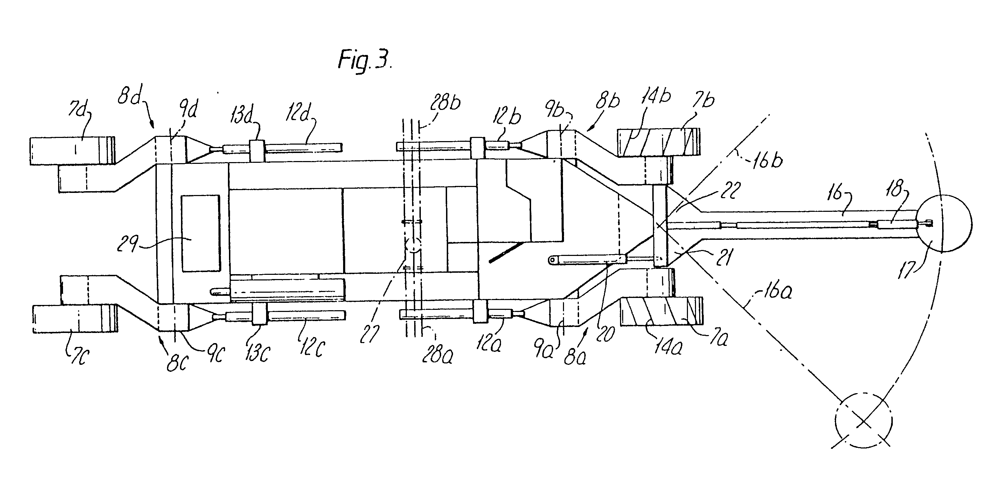

The amphibian vehicle has been provided with a dredging installation with which the bottom 4 of the water 2 can be dredged out. This dredging installation comprises a ladder 16 which is pivotable around a vertical axis 15 near the bows 5 of the hull 1. In fig. 3 the maximum pivot positions 16a and 16b have been indicated with dash-dot lines. On the outside of this ladder 16 a preferably horizontal cutter 17 is mounted, which can be controlled by means of adjusting piston-cylinder unit 18. The ladder 16 can be moved upward or downwardly around the horizontal axis 19 by means of the piston-cylinder unit 1. The pivoting out of the ladder 16 between the end positions 16a and 16d takes place by means of the piston-cylinder unit 20, which is pivotally mounted to the one outer end of the ladder foot 21, whereby the ladder 16 is pivotable around the vertical axis 22.

Furthermore the dredging installation comprises in the hull 1 yet a pump room 23 for a (non shown) dredging pump which is driven by a (non shown) prime mover, such as for example a diesel engine, comprising a damper 24 and an exhaust 25.

The suction line 26, which is visible in fig. 1 and is fastened to the ladder 16, extends through the hull 1 to the (non shown) dredging pump which is provided with an outlet pressure line 27, on which for example the with dash-dot lines drawn transport lines 28a and 28b respectively can be connected for the removal of the dredging matter. For the hydraulic installation of the several piston-cylinder units the tank 29 for hydraulic liquid is present on top of the st of the hull 1.

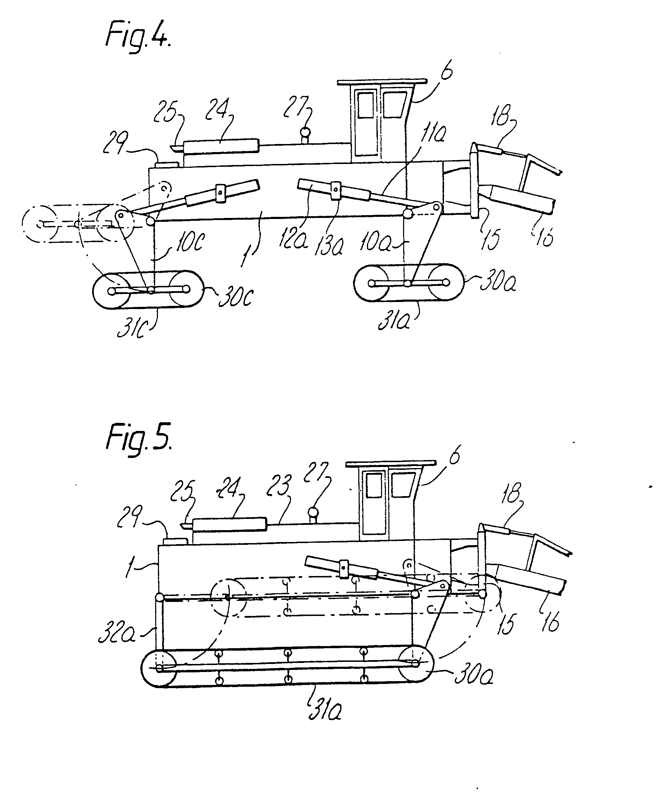

Figs. 4 and 5 show respectively a second and a third embodiment of the invention, in which the bottom transport mechanisms are provided with chain tracks.

Fig. 4 shows the mounting of four separate chain track-wheel bogies of which only the wheel bogies 30a and 30c are visible. These wheel bogies are, as in the embodiment according to figs. 1—3, pivotally mounted to the one end of the two armed levers 10, which in their turn are displaced between a high and a low end position by means of the pivoting piston-cylinder units 11 through 13. The wheel bogies 30a through 30d, which are provided with chain tracks 31, can each be separately driven by means of (non shown) hydraulic motors. The remaining parts of this amphibian vehicle equipped for dredging work according to figure 4 are the same as that of the embodiment according to figs. 1—3 and have therefore been provided with the same reference numerals. This is also valid for the third embodiment according to figure 5.

The embodiment according to figure 5 comprises a two chain track bogies with a length which is substantially the same as that of the hull 1, so that on both sides of this hull 1 only one bogie 30a and 30b respectively is mounted, of which only the bogie 30a is visible. The same is valid for the chain track 31a. For the height adjustment of these chain track wheel bogies at both sides only the front pivoting hydraulic piston-cylinder units 11 through 13a and b are present. Near the back side of the chain track bogies 31a respectively 31b only the pivoting arms 32 are present.

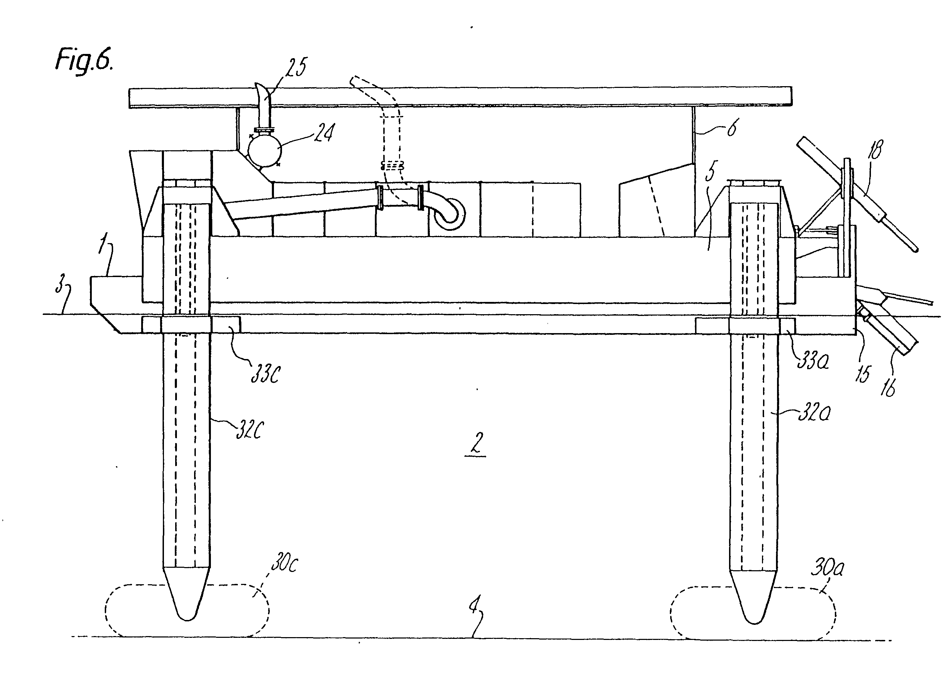

Fig. 6 shows a fourth embodiment of the invention, in which the height adjusting mechanism is formed by posts 32 which are vertically slidable in guides 33 under influence of (non shown) hydraulic jacks. Below the post 32 chain track assemblies are fastened, which are pivotable around horizontal axes and can be tilted by means of (non shown) hydraulic means in order to roll easier over unevennesses on the bottom. For the rest this fourth embodiment is in principle the same as the earlier one.

## Claims

1. Amphibian vehicle for shallow water, adapted for making ground operations, such as dredging, removal of growth in channels, ditches and water courses and such, comprising a hull (1) having a float capacity on which a height adjusting mechanism for one or more driven ground transport mechanisms is arranged, which ground support mechanism is continuously movable between a retracted and a projected end position, characterized in that the hull includes no recesses for receiving the ground transport mechanism and both the height adjustment mechanism and the ground transport mechanism are at all times located outwardly of the hull (1).

2. Amphibian vehicle according to claim 1, characterized in that, the height adjustment mechanism is formed by posts (32) which are vertically slidable in guides (33).

3. Amphibian vehicle according to claim 2, characterized in that, the posts (32) are hydraulically slidable.

4. Amphibian vehicle according to claim 1, characterized in that, the height adjustment mechanism (8) comprises one or more two armed levers (10), of which the outer end of the first arm carries at least a part of the ground transport mechanism (7, 14; 30, 31), in which the lever pivot (9) is pivoted according to a substantially horizontal axis to the hull (1) of the vehicle, whereas the outer end of the second arm is pivotably connected with the outer end of a rod of a linear movement mechanism (11, 12), of which the fixed part is pivotably conected around a horizontal axis (13) with the hull (1).

5. Amphibian vehicle according to claim 4, characterized in that, the linear movement mechanism (11, 12) is a hydraulic piston-cylinder unit, of which the outer end of the piston rod (11) is pivoted to the second arm, whereas the cylinder (12) has a pivot connection with the hull (1).

6. Amphibian vehicle according to one or more of the claims 1—4, characterized in that, the ground transport mechanism comprises a number of wheels (7).

7. Amphibian vehicle according to claim 6, characterized in that, the wheels (7) are drum shaped.

8. Amphibian vehicle according to claim 6 or 7, characterized in that, of a number of wheels (7) at least one or more can be driven and/or braked.

9. Amphibian vehicle according to one or more of the claims 6 to 8, characterized in that, the drive of the wheels is hydraulic.

10. Amphibian vehicle according to one or more of the claims 1—4, characterized in that, the ground transport mechanism comprises one or more chain track assemblies (30).

11. Amphibian vehicle according to claim 9, characterized in that, the chain track assemblies (30, 31) are each separately adjustable in height direction.

12. Amphibian vehicle according to claim 10 or 11, characterized in that, of the one or more chain track assemblies (30, 31) at least one can be hydraulically driven.

13. Amphibian vehicle according to one or more of the claims 1—11, characterized in that, as hull (1) a pontoon is present, which is provided with a dredging installation (16 through 28).

14. Amphibian vehicle according to one or more of the claims 10 to 12, characterized in that, the chain track assemblies can be tilted by means of a hydraulic mechanism.

## Patentansprüche

1. Amphibisches Fahrzeug für flaches Wasser für die Durchführung von Erdarbeiten wie Baggern, Entfernen von Bewuchs in Kanälen, Gräben, Wasserläufen und dergl., mit einem schwimmfähigen Rumpf (1), auf welchem eine Höhenverstellvorrichtung für eine oder mehrere am Grund angreifende Fortbewegungseinrichtungen angeordnet ist, mittels welcher die am Grund angreifende Fortbewegungseinrichtung stufenlos zwischen einer eingezogenen und einer ausgefahrenen Endstellung bewegbar ist, dadurch gekennzeichnet, daß der Rumpf keine Aussparungen für die Aufnahme der am Grund angreifenden Fortbewegungseinrichtung aufweist und daß sowohl die Höhenverstellvorrichtung als auch die am Grund angreifende Fortbewegungseinrichtung sich zu jeder Zeit außerhalb des Rumpfs (1) befinden.

2. Amphibisches Fahrzeug nach Anspruch 1, dadurch gekennzeichnet, daß die Höhenverstellvorrichtung aus Stützen (32) gebildet ist, welche in Führungen (33) senkrecht verschieblich sind.

3. Amphibisches Fahrzeug nach Anspruch 2, dadurch gekennzeichnet, daß die Stützen (32) hydraulische verschiebar sind.

4. Amphibisches Fahrzeug nach Anspruch 1, dadurch gekennzeichnet, daß die Höhenverstellvorrichtung (8) einen oder mehrere mit Armen bestückte Hebel (10) aufweist, von welchem der erste Arm an seinem freien Ende wenigstens ein Teil der am Grund angreifenden Fortbewegungseinrichtung (7, 14; 30, 31) trägt, wobei der Anlenkpunkt (9) des Hebels um eine im wesentlichen waagerechte Achse verschwenkbar am Rumpf (1) des Fahrzeugs gelagert ist, während das freie Ende des zweiten Arms gelenkig mit dem freien Ende einer Stange eines Linearantriebs (11, 12) verbunden ist, dessen feststehendes Teil um eine waagerechte Achse (13) verschwenkbar am Rumpf (1) gelagert ist.

5. Amphibisches Fahrzeug nach Anspruch 4, dadurch gekennzeichnet, daß der Linearantrieb (11, 12) eine hydraulische Kolben-Zylindereinheit ist, bei welcher das freie Ende der Kolbenstange (11) gelenkig mit dem tweiten Arm verbunden ist, während der Zylinder (12) schwenkbar mit dem Rumpf (1) verbunden ist.

6. Amphibisches Fahrzeug nach einem oder mehreren der Ansprüche 1—4 , dadurch gekennzeichnet, daß die am Grund angreifende Fortbewegungseinrichtung eine Anzahl von Rädern (7) aufweist.

7. Amphibisches Fahrzeug nach Anspruch 6, dadurch gekennzeichnet, daß die Räder (7) trommelförmig sind.

8. Amphibisches Fahrzeug nach Anspruch 6 oder 7, dadurch gekennzeichnet, daß von einer Anzahl Rädern (7) wenigstens eines oder mehrere antreibbar und/oder bremsbar sind.

9. Amphibisches Fahrzeug nach einem oder mehreren der Ansprüche 6 bis 8, dadurch gekennzeichnet, daß der Antrieb der Räder hydraulisch erfolgt.

10. Amphibisches Fahrzeug nach einem oder mehreren der Ansprüche 1 bis 4, dadurch gekennzeichnet, daß die am Grund angreifende Fortbewegungseinrichtung einen oder mehrere Spurkettensätze (30) aufweist.

11. Amphibisches Fahrzeug nach Anspruch 9, dadurch gekennzeichnet, daß die Spurkettensätze (30, 31) unabhängig voneinander höhenverstellbar sind.

12. Amphibisches Fahrzeug nach Anspruch 10 oder 11, dadurch gekennzeichnet, daß von den einen oder mehreren Spurkettensätzen (30, 31) wenigstens eines hydraulisch antreibbar ist.

13. Amphibisches Fahrzeug nach einem oder mehreren der Ansprüche 1—11, dadurch gekennzeichnet, daß als Rumpf (1) ein Ponton vorgesehen ist, welcher mit einer Baggeranlage (16 bis 28) versehen ist.

14. Amphibisches Fahrzeug nach einem oder mehreren der Ansprüche 10 bis 12, dadurch gekennzeichnet, daß die Spurkettensätze mittels einer hydraulischen Vorrichtung kippbar sind.

## Revendications

1. Véhicule amphibie pour eaux peu profondes, adapté à des opérations de sol telles que dragage, enlèvement de végétation dans des chenaux, fossés, cours d'eau et autres, comportant une coque (1) susceptible de flotter, sur laquelle un mécanisme de réglage de la hauteur est aménagé pour un ou plusieurs mécanismes de transport au sol, ce mécanisme de support au sol étant déplaçable de façon continue entre des positions extrêmes rétractée et dépliée, caractérisé par la fait que la coque ne comporte aucun logement pour recevoir le mécanisme de transport au sol et que, à la fois, le mécanisme de réglage de hauteur et le mécanisme de transport au sol, sont constamment situés à l'extérieur de la coque (1).

2. Véhicule amphibie selon la revendication 1, caractérisé par le fait que le mécanisme de réglage de hauteur est constitué par des poteaux (32) pouvant coulisser verticalement dans des guides (33).

3. Véhicule amphibie selon la revendication 2, caractérisé par le fait que le coulissement des poteaux (32) se fait hydrauliquement.

4. Véhicule amphibie selon la revendication 1, caractérisé par le fait que le mécanisme de réglage de hauteur (8) comprend un ou plusieurs leviers à deux bras (10) dont l'extrémité extérieure du premier bras porte au moins une partie du mécanisme de transport au sol (7, 14, 30, 31), le levier pivotant autour d'un axe (9) essentiellement horizontal de la coque (1) du véhicule, alors que l'extrémité extérieure du second bras est liée en pivotement à l'extrémité extérieur de la tige d'un mécanisme de mouvement linéaire (11, 12) dont la partie fixe est montée à pivotement autour d'un axe horizontal (13) sur la coque (1).

5. Véhicule amphibie selon la revendication 4, caractérisé par le fait que le mécanisme de mouvement linéaire (11, 12) est un ensemble piston-cylindre hydraulique dont l'extrémité extérieure de la tige de piston (11) est reliée à pivotement au second bras, alors que le cylindre (12) est lié en pivotement à la coque (1).

6. Véhicule amphibie selon l'une ou plusieurs des revendications 1 à 4, caractérisé par le fait que le mécanisme de transport au sol comporte plusieurs roues (7).

7. Véhicule amphibie selon la revendication 6, caractérisé par le fait que les roues (7) ont une forme en tambour.

8. Véhicule amphibie selon la revendication 6 our la revendications 7, caractérisé par le fait que, parmi les roues (7), au moins une ou plusieurs peuvent être entrainées et/ou freinées.

9. Véhicule amphibie selon l'une ou plusieurs des revendications 6 à 8, caractérisé par le fait que l'entrainement des roues est hydraulique.

10. Véhicule amphibie selon l'une ou plusieurs des revendications 1 à 4, caractérisé par le fait que le mécanisme de transport au sol comporte un ou plusieurs ensembles à chenille à chaîne (30).

11. Véhicule amphibie selon la revendication 9, caractérisé par le fait que les ensembles à chenille à chaîne (30, 31) sont chacun réglables séparément en hauteur.

12. Véhicule amphibie selon la revendication 10 ou 11, caractérisé par le fait que du ou des ensembles à chenille à chaîne (30, 31), au moins un est actionnable hydrauliquement.

13. Véhicule amphibie selon l'une ou plusieurs des revendications 1 à 11, caractérisé par le fait que la coque (1) est un ponton muni d'une installation de dragage (16 à 28).

14. Véhicule amphibie selon l'une ou plusieurs des revendications 10 à 12, caractérisé par le fait que les ensembles de chenille à chaîne peuvent être basculés au moyen d'un mécanisme hydraulique.

Fig.1.

Fig.2.

Fig.3.

0 139 789

**Fig.4.**

**Fig.5.**

Fig.6.